(19) Europäisches Patentamt
European Patent Office
Office européen des brevets

(11) EP 3 288 061 A1

(12) **EUROPEAN PATENT APPLICATION**

(43) Date of publication:
28.02.2018 Bulletin 2018/09

(51) Int Cl.:
*H01J 49/14* $^{(2006.01)}$      *H01L 21/00* $^{(2006.01)}$

(21) Application number: 16461554.4

(22) Date of filing: 24.08.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: **Instytut Technologii Materialów Elektronicznych**
**01-919 Warszawa (PL)**

(72) Inventors:
• **Michalowski, Pawel**
  **60-688 Poznan (PL)**
• **Strupinski, Wlodzimierz**
  **01-934 Warszawa (PL)**
• **Kaszub, Wawrzyniec**
  **00-131 Warszawa (PL)**

(74) Representative: **Dobrzanski, Jan Pawel**
**AOMB Polska Sp. z o.o.**
**ul. Emilii Plater 53**
**21st floor**
**00-113 Warsaw (PL)**

(54) **GRAPHENE-ENHANCED SECONDARY ION MASS SPECTROSCOPY ANALYSIS**

(57)  The present invention is related to a method of analysing a solid substrate by means of Secondary Ion Mass Spectroscopy (SIMS) comprising the steps of providing a graphene layer over the substrate surface, sputtering of the graphene-coated substrate in a dynamic mode (dSIMS), and detecting and analyzing ejected secondary anions by mass spectrometry analysis. The method according to the invention is useful for characterising surfaces, 2D materials, ultra-thin films, 2D and 3D imaging, depth profiling and concentration analysis, preferably for determining concentration of trace elements in a thin support.

FIG. 4

EP 3 288 061 A1

## Description

### Technical field

The present invention is related to a method of analysing a solid substrate by means of Secondary Ion Mass Spectroscopy (SIMS) comprising the steps of providing a graphene layer over the substrate surface, sputtering of the graphene-coated substrate in a dynamic mode (dSIMS), and detecting and analyzing ejected secondary anions by mass spectrometry analysis. The method according to the invention is useful for characterising surfaces, 2D materials, ultra-thin films, 2D and 3D imaging, depth profiling and concentration analysis, preferably for determining concentration of trace elements in a thin support.

### Background art

SIMS is a very precise analytical technique used to determine the elemental composition of a sample [1-6]. The sample is bombarded with a primary ion beam which leads to the sputtering of the surface. Small part of the sputtered particles are ionized (secondary ions) and the sample composition can be determined by means of mass spectral analysis. During the sputtering subsequent layers of the sample are removed and thus one can obtain the information about changes of the composition as a function of depth, thus creating a depth profile.

SIMS is well known for its excellent detection limits of trace elements [7-10]. For most materials it is reported to be in range of $10^{15}$ - $10^{16}$ atoms/cm$^3$ [11-12], sometimes even as good as $10^{12}$ atoms/cm$^3$ [13]. These best detection limits, however, are achieved during the determination of a bulk concentration of a trace element. In this mode a very dense ion beam is used and a lot of material is sputtered simultaneously and thus more ions can be detected. Drawbacks include a very poor depth resolution and limitation to thick materials.

In case of surface, 2D materials and ultra-thin films analysis SIMS reaches its physical limitation. As a relatively small amount of matter is sputtered, and even less ionized, there is not enough secondary ions extracted from the sample to achieve such a good detection limit. In most cases it is difficult to exceed 1 ppm limit ($5*10^{16}$ atoms/cm$^3$ or $10^9$ atoms/cm$^2$).

There are many ways to enhance the ionization probability and thus the detection limit. It has been noted that using oxygen as primary ions significantly enhances the formation of positive ions [14-17], whereas cesium - negative ones [15-18]. For some elements the difference can be up to four orders of magnitude. Although most elements can be detected as both positive and negative ions, usually each element gives better results in terms of detection limit either positive or negative mode. In some experiments oxygen flooding can further enhance the secondary ion yields of some negative ions [19-21].

Several SIMS measurements on graphene have already been reported [22-29]. More specifically, SIMS was used to map the surface of the graphene layer [22, 23], to analyze mass spectra of graphene [24, 25], or to create a depth profile of single-layer graphene grown on substrates that do not contain carbon [26, 27]. Furthermore, SIMS has been used for depth profiling of over 3 mm-thick multilayer graphene on SiC [28] and, recently, also of hydrogen-intercalated graphene on SiC having theoretical thickness of 0.69 nm [29]. All these methods employed SIMS for characterising graphene layer, while the composition of support material underneath was not analysed.

Using the above-discussed techniques is useful, but in case of surface, 2D materials and ultra-thin films it is often not enough to reach desired detection limit, in particular in case of trace elements.

### Summary of the invention

The aim of the present invention was to provide a new SIMS technique allowing to enhance detection limit in case of analysis of thin materials.

The inventors have found that providing a graphene layer on a thin substrate, followed by destroying a small part of this layer in a dynamic SIMS mode, significantly reduces the initial strong blocking effect of graphene with respect to partial sputter yield, while the enhancement of the ionization probability of the sputtered material is still observed. Under these conditions the ionization probability greatly prevails, resulting in unexpectedly high gain factor and thus allowing to reach better detection limits.

Therefore, the invention is related to a method of analysing a solid substrate by means of SIMS, characterised in that it includes the following steps:

- providing a graphene layer over the substrate surface;
- annealing the graphene-coated substrate at elevated temperature and reduced pressure;
- sputtering of the graphene-coated substrate in a dynamic mode (dSIMS), wherein the primary beam intensity ranges from 100 to 2000 pA;

- detecting and analyzing ejected secondary anions by mass spectrometry analysis.

In a preferred embodiment of the method according to the present invention once the highest gain factor is achieved in the dynamic mode of sputtering of the graphene-coated substrate, the sputtering mode is changed to a static mode (sSIMS) by reducing the primary ion beam intensity to a value between 0.5 and 10 pA, with the impact energy being between 1 and 30 keV.

Preferably the graphene layer is grown on the substrate in a chemical vapour deposition (CVD) process or is transferred from another substrate.

In a preferred embodiment of the method according to the invention the annealing step is conducted at the temperature ranging from 100 to 300°C for 1 to 3 hours, under the pressure ranging from $10^{-6}$ to $10^{-8}$ mbar (1 mbar = 1 hPa). In a more preferred embodiment of the method according to the invention the annealing step is conducted at the temperature of 200°C for 2 hours under the pressure of $10^{-8}$ mbar.

In another preferred embodiment of the method according to the invention the primary beam intensity in dSIMS mode ranges from 200 to 500 pA.

In yet another preferred embodiment of the method according to the invention the sputtering step in dSIMS mode is continued for a period ranging from 10 seconds up to 5 minutes.

In a further preferred embodiment of the method according to the invention the impact energy in sSIMS mode is above 10 keV.

The present invention is also related to use of the method defined above for characterising surfaces, 2D materials, ultra-thin films, 2D and 3D imaging, depth profiling and concentration analysis, preferably for determining concentration of trace elements in a thin support.

The major advantage of the present invention is enhancing the detection limit of trace elements in this substrates.

The annealing step allows to clean the substrate surfaces directly prior to the measurement and thus to achieve a good reproducibility of the results.

The preferred embodiment comprising the change of the sputtering mode from dSIMS to sSIMS once the highest gain factor is achieved provides a reproducible and quantifiable analytical method showing better sensitivity than standard sSIMS analysis. In this preferred embodiment it is possible to not only to probe the surface without causing significant damage to it, but also to maintain enhanced ionization probability, since the graphene layer is preserved to a large extent on the substrate surface. In this embodiment possible problems associated with difficulties in determining whether signal intensity changes result from the change of concentration of a given dopant or from changing ionization probability due to graphene layer damage, are avoided.

## Short description of the drawings

The invention will be now presented in greater detail in a preferred embodiment, with reference to the accompanying drawings, in which:

Fig. 1 shows a periodic table of elements with preferential modes of detection in terms of detection limits;
Fig. 2: shows mass spectrum of germanium substrate with and without graphene CVD grown on the surface obtained in static mode (sSIMS);
Fig. 3: shows relation between gain factor and primary ions energy (for Te dopant);
Fig. 4: shows changes of the gain factor during dynamic SIMS mode (Si dopant) for three different primary beam intensities;
Fig. 5: shows static sSIMS measurement of Sb dopant in Si, no graphene;
Fig. 6: shows sSIMS measurement of Sb dopant in Si with graphene;
Fig. 7: shows gain factor measured at five different spots for various sputtering time [dynamic mode (dSIMS)] for dirty and clean samples;
Fig. 8: shows changes of the gain factor during dSIMS mode in the positive mode (Ga signal).

## Detailed description of the invention

### Example 1

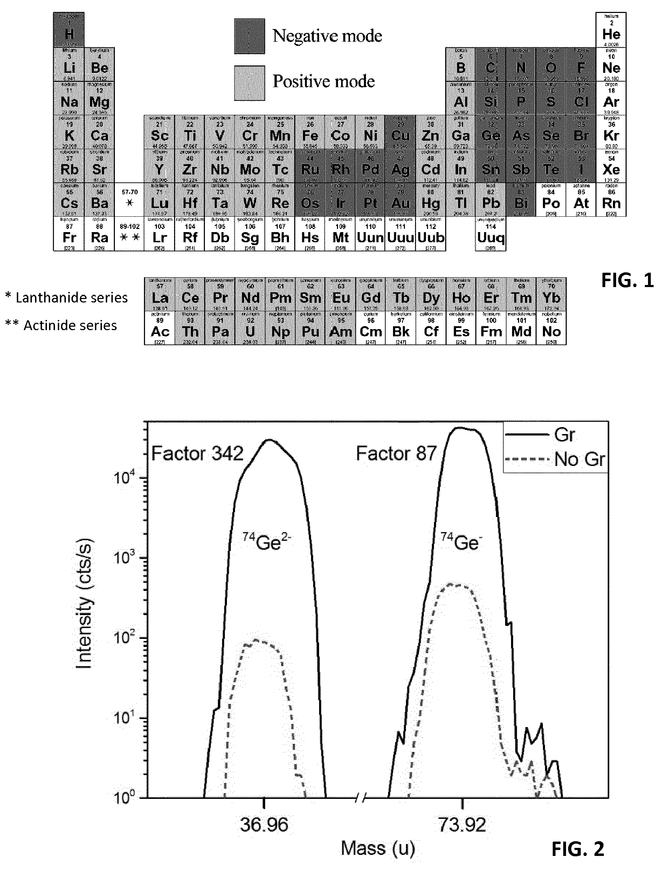

Samples of germanium-containing support with and without graphene CVD grown thereon were subjected to SIMS analysis. Fig. 2 compares mass spectra of these two samples. As it can be clearly seen, the presence of graphene significantly enhances the formation of $^{74}Ge^-$ and $^{74}Ge^{2-}$ ions. These spectra were obtained using $Cs^+$ bombardment with a very low intensity (less than 10 pA) to ensure that only a small fraction of the surface is destroyed during the bombardment (so called static SIMS or sSIMS [30]). The ion energy was modest, namely 6.5 keV to ensure that the collision cascade started by each incoming ion is high enough to sputter enough material.

To understand the process correctly one has to take into account that the intensity of SIMS signals depends on a secondary ion yield which is defined as a number of emitted ions A$^-$/A$^+$ (multiple ionization is also possible) per incident ion. This gain factor is defined as a derivative of partial sputter yield (number of emitted species A per incident ion) and ionization probability. It can be presented by the following equation:

$$ GF = \frac{Y_{gr} * \alpha_{gr}}{Y * \alpha} $$

wherein GF is a gain factor, $Y_{gr}$ and Y denote partial sputter yield for a sample with and without graphene, respectively, while $\alpha_{gr}$ and $\alpha$ denote ionization probabilities (again a sample with and without graphene, respectively). It is a well known experimental fact that under optimum conditions $Y_{gr} < Y$ and $\alpha_{gr} > \alpha$, whereby the latter effect is much stronger, so that GF > 1.

The presence of graphene on the germanium substrate surface clearly reduces the partial sputter yield of Ge, since for given conditions one can expect that sputtered species are emitted from the ~3 top monolayers of material and graphene acts as a blockade for Ge emission. Despite this fact a significant increase of the SIMS signal intensity is still observed. The only possible explanation is that the presence of graphene drastically increases the negative ionization probability.

**Example 2**

Although increasing the intensity of matrix element signal is scientifically interesting, it does not seem to have much practical application in SIMS-based surface analysis. As already mentioned above, the actual benefit of the present invention is the enhancement of the detection limit of trace elements. As shown in Fig. 1, there are certain elements that are best detected as negative ions and thus new sets of samples were considered and tested:

- Si doped with Sb
- Si doped with As
- AlGaAs doped with Si
- GaAs doped with Te

Each of the sets consisted of a pair of samples, one having graphene transferred on its surface, and the other - without graphene - serving as a reference. Signal enhancement was observed for all of them and maximum gain that was reached during the experiments presented in Table 1 below.

Table 1: Summary of Graphene-Enhanced Secondary Ion Mass Spectroscopy measurements according to the present invention performed on various dopants

| Dopant | Concentration (atoms/cm$^3$) | Maximal gain factor | Standard detection limit (atoms/cm$^3$) | Enhanced detection limit (atoms/cm$^3$) |
|---|---|---|---|---|
| Te | ~1*10$^{18}$ | 35.7 | 7.04*10$^{16}$ | 1.97*10$^{15}$ |
| Sb | ~1*10$^{18}$ | 15.1 | 4.86*10$^{16}$ | 3.02*10$^{15}$ |
| Si | ~2*10$^{18}$ | 13.8 | 6.06*10$^{16}$ | 4.39*10$^{15}$ |
| As | ~5*10$^{18}$ | 7.1 | 1.35*10$^{16}$ | 1.90*10$^{15}$ |

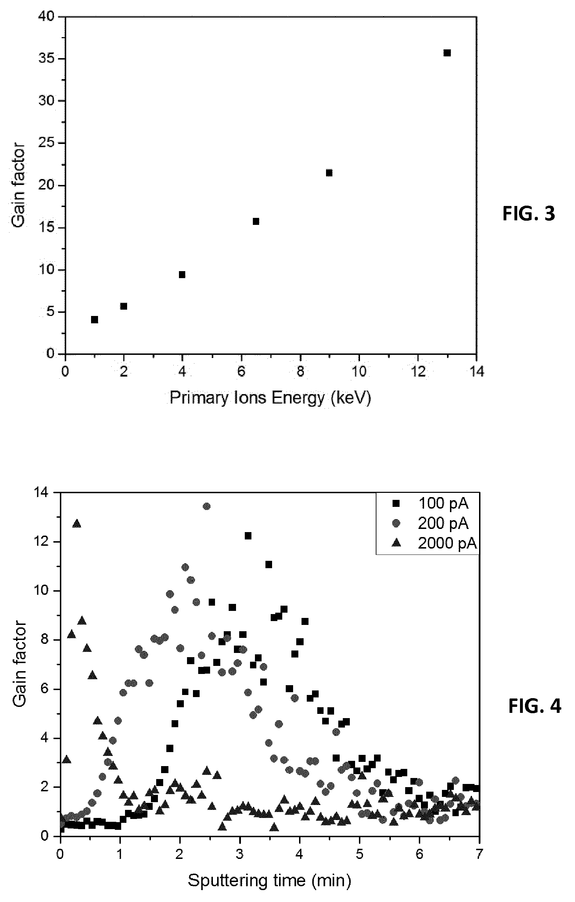

As it was already mentioned, the presence of graphene layer on the surface of the support material reduces partial sputter yield and increases ionization probability. Better results can be therefore expected for ions with higher energies as they create larger collision cascades and thus more species are emitted from the sample. Fig. 3 shows a comparisons of gains versus primary ion energy for Te dopant.

At the very beginning of the experiment a reverse effect is observed - the signal for sample with graphene layer is lower. It is not surprising since graphene is a strong material and the blocking effect is expected to be high. Thus reduction of the partial sputter yield is higher than the increase of the ionization probability. To overcome it, the primary beam intensity has to be increased to several hundreds of pA for a short time. Under such conditions dynamic SIMS (dSIMS) mode is achieved and the entire surface is being slowly eroded. Once only a small part of the graphene sheet is destroyed the blocking effect is significantly reduced while the enhancement of the ionization probability is still observed.

When the optimal conditions are reached the beam intensity should be decreased and static SIMS (sSIMS) measurement can be performed. The sSIMS mode is semi-nondestructive, the surface is probed without causing a lot of damage to it.

Fig. 4 shows the gain change during sputtering in dynamic (dSIMS) mode with the primary beam intensity being set to one of three following values: 100 pA, 200 pA and 2000 pA, each time for Si dopant. Three regions can be identified for each beam intensity used: at the beginning of the experiment the blocking effect is too strong and thus the signal for sample with graphene is reduced (gain factor < 1). After sputtering off a small part of graphene the enhanced ionization probability takes the major role and thus the gain is much larger than of factor 1 (gain factor » 1). If the beam intensity is kept at high values for a longer time, complete destruction of the graphene layer takes place, and consequently no difference between the two samples in each set is further observed (gain factor = 1). As shown in fig. 4, for the highest beam intensity (2000 pA) the highest gain factor is obtained in a very short time (approximately 10 seconds), while in case of the lowest beam intensity (100 pA) it takes much longer (approximately up to 5 minutes).

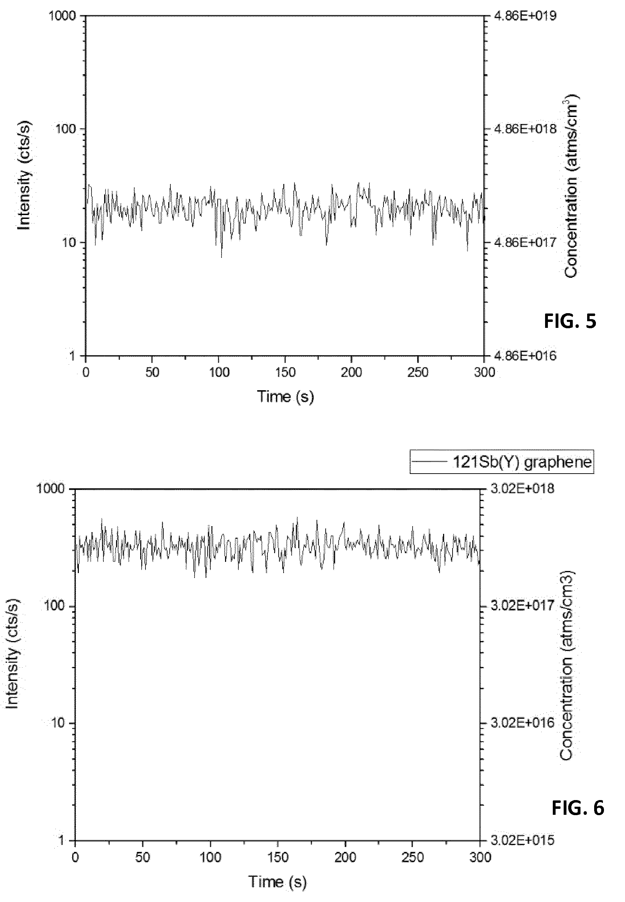

When the beam intensity is reduced at the point, at which the gain factor value is optimal (i.e. the highest) static SIMS measurements can performed. Fig. 5 and 6 present the outcome of such measurements for Sb dopant for sample without and with graphene, respectively. The detection limit was improved from $4.86*10^{16}$ atoms/cm$^3$ to $3.02*10^{15}$ atoms/cm$^3$. The improvement of detection limit for this and other tested species under sSIMS conditions are presented in the Table 1 above.

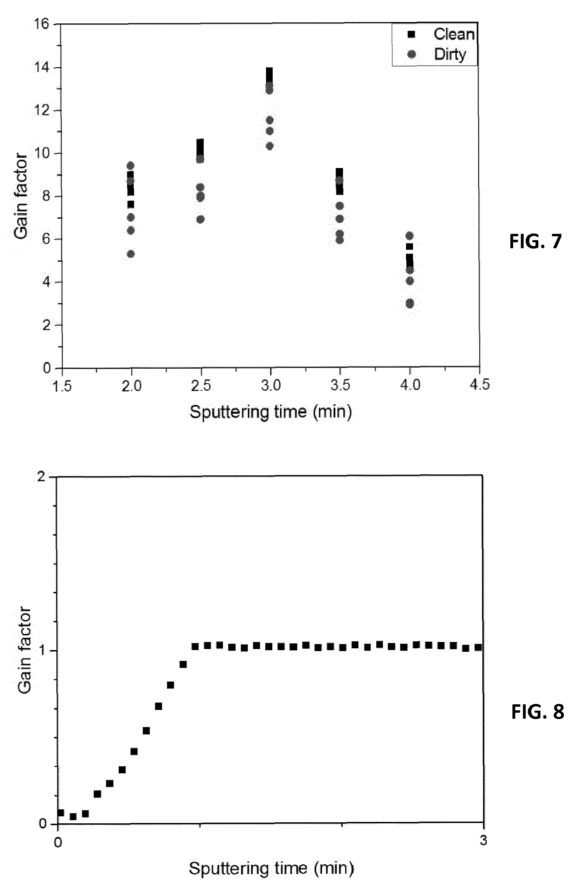

To achieve a good reproducibility of the method samples must be cleaned prior to the measurement by annealing them at elevated temperatures and reduced pressure. In the experiment described above the samples were subjected to annealing at 200°C and pressure of $10^{-8}$ mbar for two hours. Fig. 7 shows a suitable comparison of Si dopant samples with and without cleaning procedures. The intensity of the primary beam was set to 200 pA and duration of the dynamic SIMS (dSIMS) mode was varied between 2 and 4 minutes.

Five different measurements were taken at various spots of the sample, leading to a straightforward conclusion that for the cleaned sample the method is reproducible, with small variations only.

The complete experimental procedure of graphene-enhanced Secondary Ion Mass Spectroscopy measurements described here included the following steps:

- transferring graphene sheets onto the substrate (one in each of the four sets of samples mentioned above) using PMMA method (described inter alia in [31-32]);
- annealing the samples at 200°C and pressure of $10^{-8}$ mbar for two hours;
- short and gentle sputtering of each sample to ensure reduction of the blocking effect while maintaining the enhanced ionization probability (dynamic SIMS mode); dSIMS beam intensity ranged from 200 to 500 pA;
- determination of sputtering conditions that provide optimal gain factor - in general gain vs time relation was monitored and the duration of dSIMS was determined for a given sputtering parameters, in which the gain factor was the highest;
- reducing the primary beam intensity and actual measurements (static SIMS); sSIMS beam intensity ranged from 0.5 to 10pA, and sSIMS impact energy was above 10keV.

In this example the dSIMS step served to remove small portion of graphene layer, while the actual measurements were made in sSIMS mode.

## Comparative example

Similar procedure as described above, was performed using $O_2^+$ bombardment with positive ions detection. No enhancement effect was observed for any material tested. Fig. 8 shows the change of the gain of $Ga^+$ signal during the sputtering in dynamic mode with the beam intensity set to 500 pA. The blocking effect can be observed at the beginning of the profile and after destruction of graphene sheet there is no difference between the two samples. It means that the presence of graphene enhances only the negative ionization probability. Thus, while the ions of the primary beam are of lower relevance, it is essential for the measurements in the graphene-enhanced SIMS method according to the invention to be realised in a negative mode, wherein the ionic species to be detected are anions.

## References

[1] C. A. Andersen and J. R. Hinthorne, "Ion Microprobe Mass Analyzer," Science (80-. )., vol. 175, no. 4024, pp. 853-860, Feb. 1972.
[2] A. Benninghoven, "Developments in secondary ion mass spectroscopy and applications to surface studies," Surf. Sci., vol. 53, no. 1, pp. 596-625, 1975.
[3] A. Benninghoven, F. G. Rudenauer, and H. W. Werner, Secondary ion mass spectrometry: basic concepts, instrumental aspects, applications and trends. John Wiley and Sons, New York, 1987.

[4] H. W. Werner, "The use of secondary ion mass spectrometry in surface analysis.," in Surface Science, Proceedings of the Third Symposium on Surface Physics University of Utrecht, The Netherlands 26-28 June 1974, vol. 47, no. 1, 1975, pp. 301-323.

[5] H. Liebl, "Secondary-ion mass spectrometry and its use in depth profiling," J. Vac. Sci. Technol., vol. 12, no. 1, p. 385, 1975.

[6] H. Liebl, "Ion microprobe mass analyzer," J. Appl. Phys., vol. 38, no. 13, pp. 5277-5283,1967.

[7] K. Wittmaack, "High-sensitivity depth profiling of arsenic and phosphorus in silicon by means of SIMS," Appl. Phys. Lett., vol. 29, no. 9, 1976.

[8] B. Y. Ber, Y. A. Kudriavtsev, A. V. Merkulov, S. V. Novikov, D. E. Lacklison, J. W. Orton, T. S. Cheng, and C. T. Foxon, "Secondary ion mass spectroscopy investigations of magnesium and carbon doped gallium nitride films grown by molecular beam epitaxy," Semicond. Sci. Technol., vol. 13, pp. 71-74, 1998.

[9] C. Y. Chiou, C. C. Wang, Y. C. Ling, and C. I. Chiang, "Secondary ion mass spectrometry analysis of In-doped p-type GaN films," Appl. Surf. Sci., vol. 203-204, pp. 482-485, 2003.

[10] M. Emziane, K. Durose, D. P. Halliday, A. Bosio, and N. Romeo, "In situ oxygen incorporation and related issues in CdTe/CdS photovoltaic devices," J. Appl. Phys., vol. 100, no. April, p. 013513, 2006.

[11] T. Matsunaga, S. Yoshikawa, and K. Tsukamoto, "Secondary ion yields of C, Si, Ge and Cs surface density and concentration in SIMS," Surf. Sci., vol. 515, pp. 390-402, 2002.

[12] Evans Analytical Group, "SIMS Detection Limits of Selected Elements in Si and SiO2 Under Normal Depth Profiling Conditions." 2007.

[13] H. Gnaser, "SIMS Detection in the 10^12 Atoms cm-3 Range," Surf. Interface Anal., vol. 25, no. 10, pp. 737-740, 1997.

[14] S. W. Novak and R. G. Wilson, "Systematics of positive secondary ion mass spectrometry relative sensitivity factors for Si and SiO2 measured using oxygen and argon ion bombardment," J. Appl. Phys., vol. 69, pp. 463-465, 1991.

[15] G. Slodzian, J. C. Lorin, and A. Havette, "Isotopic effect on the ionization probabilities in secondary ion emission," J. Phys. Lettres, vol. 41, no. 23, pp. 555-558, 1980.

[16] H. Gnaser and I. D. Hutcheon, "Significance of isotope effects for secondary-ion emission models," Phys. Rev. B, vol. 38, no. 16, pp. 11112-11117, Dec. 1988.

[17] Y. Taga, "Sputtering and Secondary Ion Emission From Metals and Alloys Subjected to Oxygen Ion Bombardment," in Secondary Ion Mass Spectrometry SIMS V, A. Benninghoven, Ed. Springer-Verlag Berlin Heidelberg, 1986, pp. 32-37.

[18] F. A. Stevie, P. M. Kahora, D. S. Simons, and P. Chi, "Secondary ion yield changes in Si and GaAs due to topography changes during O+2 or Cs+ ion bombardment," J. Vac. Sci. Technol. A Vacuum, Surfaces, Film., vol. 6, no. 1, p. 76, 1988.

[19] R. K. Lewis, J. M. Morabito, and J. C. C. Tsai, "Primary oxygen ion implantation effects on depth profiles by secondary ion emission mass spectrometry," Appl. Phys. Lett., vol. 23, no. 5, pp. 260-262, 1973.

[20] J. C. Vickerman, A. Brown, and N. M. Reed, Secondary ion mass spectrometry: Principles and applications. Clarendon Press, Oxford, 1989.

[21] R. G. Wilson, F. A. Stevie, and C. W. Magee, Secondary ion mass spectrometry: A practical handbook for depth profiling and bulk impurity analysis. John Wiley & Sons Inc., New York, 1989.

[22] Z. Luo, S. Lim, Z. Tian, J. Shang, L. Lai, B. MacDonald, C. Fu, Z. Shen, T. Yu, and J. Lin, J. Mater. Chem. 21, 8038 (2011).

[23] G. Lupina, J. Kitzmann, I. Costina, M. Lukosius, C. Wenger, A. Wolff, S. Vaziri, M. Oestling, I. Pasternak, A. Krajewska, W. Strupinski, S. Kataria, A. Gahoi, M. C. Lemme, G. Ruhl, G. Zoth, O. Luxenhofer, and W. Mehr, ACS Nano 9(5), 4776 (2015).

[24] N. Dwivedi, N. Satyanarayana, R. Yeo, H. Xu, K. Loh, S. Tripathy, and C. Bhatia, Sci. Rep. 5, 11607 (2015).

[25] W. Xie, L.-T. Weng, K. Ng, C. Chan, and C.-M. Chan, Carbon 94, 740 (2015).

[26] Q. Li, H. Chou, J.-H. Zhong, J.-Y. Liu, A. Dolocan, J. Zhang, Y. Zhou, R. Ruoff, S. Chen, and W. Cai, Nano Lett. 13(2), 486 (2013).

[27] H. Chou, A. Ismach, R. Ghosh, R. Ruoff, and A. Dolocan, Nat. Commun. 6, 7482 (2015).

[28] S. Yannopoulos, A. Siokou, N. Nasikas, V. Dracopoulos, F. Ravani, and G. Papatheodorou, Adv. Funct. Mater. 22, 113 (2012).

[29] P. Michalowski, W. Kaszub, A. Merkulov, and W. Strupinski, "Secondary ion mass spectroscopy depth profiling of hydrogen-intercalated graphene on SiC", Appl. Phys. Lett. 109, 011904 (2016).

[30] I. S. Gilmore and M. P. Seah, "Static SIMS: towards unfragmented mass spectra - the G-SIMS procedure," Appl. Surf. Sci., vol. 161, no. 3-4, pp. 465-480, Jul. 2000.

[31] X. Liang et al., "Toward Clean and Crackless Transfer of Graphene" ACS Nano, 2011, 5 (11), pp 9144-9153

[32] X. Li et.al., "Transfer of Large-Area Graphene Films for High-Performance Transparent Conductive Electrodes", Nano Lett., 2009, 9 (12), pp 4359-4363

**Claims**

1. A method of analysing a solid substrate by means of Secondary Ion Mass Spectroscopy (SIMS), **characterised in that** it includes the following steps:

   - providing a graphene layer over the substrate surface;
   - annealing the graphene-coated substrate at elevated temperature and reduced pressure;
   - sputtering of the graphene-coated substrate in a dynamic mode (dSIMS), wherein the primary beam intensity ranges from 100 to 2000 pA;
   - detecting and analyzing ejected secondary anions by mass spectrometry analysis.

2. The method according to claim 1, wherein once the highest gain factor is achieved in the dynamic mode of sputtering of the graphene-coated substrate, the sputtering mode is changed to a static mode (sSIMS) by reducing the primary ion beam intensity to a value between 0.5 and 10 pA, with the impact energy being between 1 and 30 keV.

3. The method according to claim 1 or 2, wherein the graphene layer is grown on the substrate in a chemical vapour deposition (CVD) process or is transferred from another substrate.

4. The method according to any of claim 1-3, wherein the annealing step is conducted at the temperature ranging from 100 to 300°C for 1 to 3 hours, under the pressure ranging from $10^{-6}$ to $10^{-8}$ mbar.

5. The method according to claim 4, wherein the annealing step is conducted at the temperature of 200°C for 2 hours under the pressure of $10^{-8}$ mbar.

6. The method according to any of claims 1-5, wherein the primary beam intensity in dSIMS mode ranges from 200 to 500 pA.

7. The method according to any of the claims 1-6, wherein the sputtering step in dSIMS mode is continued for a period ranging from 10 seconds up to 5 minutes.

8. The method according to any of claims 1-7, wherein the impact energy in sSIMS mode is above 10 keV.

9. Use of the method defined in any of the claims 1-8 for characterising surfaces, 2D materials, ultra-thin films, 2D and 3D imaging, depth profiling and concentration analysis.

10. Use according to claim 9, for determining concentration of trace elements in a thin support.

FIG. 1

* Lanthanide series

** Actinide series

FIG. 2

**FIG. 3**

**FIG. 4**

**FIG. 5**

**FIG. 6**

**FIG. 7**

**FIG. 8**

Europäisches
Patentamt

European
Patent Office

Office européen
des brevets

# EUROPEAN SEARCH REPORT

Application Number

EP 16 46 1554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/326128 A1 (SHIN HYEON-JIN [KR] ET AL) 27 December 2012 (2012-12-27) * paragraph [0138] * | 1,3-10 | INV. H01J49/14 H01L21/00 |
| A,D | MICHALOWSKI PAWEL PIOTR ET AL: "Secondary ion mass spectroscopy depth profiling of hydrogen-intercalated graphene on SiC", APPLIED PHYSICS LETTERS, A I P PUBLISHING LLC, US, vol. 109, no. 1, 4 July 2016 (2016-07-04), XP012209034, ISSN: 0003-6951, DOI: 10.1063/1.4958144 [retrieved on 2016-07-04] * page 109 * | 1-10 | |
| A,D | WENJING XIE ET AL: "Clean graphene surface through high temperature annealing", CARBON., vol. 94, 13 July 2015 (2015-07-13), pages 740-748, XP55338629, GB ISSN: 0008-6223, DOI: 10.1016/j.carbon.2015.07.046 * the whole document * | 1-10 | |

| TECHNICAL FIELDS SEARCHED (IPC) |
|---|
| H01J H01L |

The present search report has been drawn up for all claims

| Place of search | Date of completion of the search | Examiner |
|---|---|---|
| The Hague | 25 January 2017 | Peters, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                            
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 46 1554

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2017

| Patent document cited in search report | Publication date | Patent family member(s) | Publication date |
|---|---|---|---|
| US 2012326128 A1 | 27-12-2012 | KR 20130006869 A<br>US 2012326128 A1<br>US 2014141265 A1 | 18-01-2013<br>27-12-2012<br>22-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. A. ANDERSEN ; J. R. HINTHORNE.** Ion Microprobe Mass Analyzer. *Science (80-.),* February 1972, vol. 175 (4024), 853-860
- **A. BENNINGHOVEN.** Developments in secondary ion mass spectroscopy and applications to surface studies. *Surf. Sci,* 1975, vol. 53 (1), 596-625
- **A. BENNINGHOVEN ; F. G. RUDENAUER ; H. W. WERNER.** Secondary ion mass spectrometry: basic concepts, instrumental aspects, applications and trends. John Wiley and Sons, 1987
- **H. W. WERNER.** The use of secondary ion mass spectrometry in surface analysis. *Surface Science, Proceedings of the Third Symposium on Surface Physics University of Utrecht, The Netherlands,* 26 June 1974, vol. 47 (1), 301-323
- **H. LIEBL.** Secondary-ion mass spectrometry and its use in depth profiling. *J. Vac. Sci. Technol.,* 1975, vol. 12 (1), 385
- **H. LIEBL.** Ion microprobe mass analyzer. *J. Appl. Phys.,* 1967, vol. 38 (13), 5277-5283
- **K. WITTMAACK.** High-sensitivity depth profiling of arsenic and phosphorus in silicon by means of SIMS. *Appl. Phys. Lett.,* 1976, vol. 29 (9
- **B. Y. BER ; Y. A. KUDRIAVTSEV ; A. V. MERKULOV ; S. V. NOVIKOV ; D. E. LACKLISON ; J. W. ORTON ; T. S. CHENG ; C. T. FOXON.** Secondary ion mass spectroscopy investigations of magnesium and carbon doped gallium nitride films grown by molecular beam epitaxy. *Semicond. Sci. Technol.,* 1998, vol. 13, 71-74
- **C. Y. CHIOU ; C. C. WANG ; Y. C. LING ; C. I. CHIANG.** Secondary ion mass spectrometry analysis of In-doped p-type GaN films. *Appl. Surf. Sci.,* 2003, vol. 203 (204), 482-485
- **M. EMZIANE ; K. DUROSE ; D. P. HALLIDAY ; A. BOSIO ; N. ROMEO.** In situ oxygen incorporation and related issues in CdTe/CdS photovoltaic devices. *J. Appl. Phys.,* April 2006, vol. 100, 013513
- **T. MATSUNAGA ; S. YOSHIKAWA ; K. TSUKAMOTO.** Secondary ion yields of C, Si, Ge and Cs surface density and concentration in SIMS. *Surf. Sci.,* 2002, vol. 515, 390-402
- **EVANS ANALYTICAL GROUP.** *SIMS Detection Limits of Selected Elements in Si and SiO2 Under Normal Depth Profiling Conditions,* 2007
- **H. GNASER.** SIMS Detection in the 10^12 Atoms cm-3 Range. *Surf. Interface Anal.,* 1997, vol. 25 (10), 737-740

- **S. W. NOVAK ; R. G. WILSON.** Systematics of positive secondary ion mass spectrometry relative sensitivity factors for Si and SiO2 measured using oxygen and argon ion bombardment. *J. Appl. Phys.,* 1991, vol. 69, 463-465
- **G. SLODZIAN ; J. C. LORIN ; A. HAVETTE.** Isotopic effect on the ionization probabilities in secondary ion emission. *J. Phys. Lettres,* 1980, vol. 41 (23), 555-558
- **H. GNASER ; I. D. HUTCHEON.** Significance of isotope effects for secondary-ion emission models. *Phys. Rev. B,* December 1988, vol. 38 (16), 11112-11117
- Sputtering and Secondary Ion Emission From Metals and Alloys Subjected to Oxygen Ion Bombardment. **Y. TAGA.** Secondary Ion Mass Spectrometry SIMS. Springer-Verlag, 1986, 32-37
- **F. A. STEVIE ; P. M. KAHORA ; D. S. SIMONS ; P. CHI.** Secondary ion yield changes in Si and GaAs due to topography changes during O+2 or Cs+ ion bombardment. *J. Vac. Sci. Technol. A Vacuum, Surfaces, Film.,* 1988, vol. 6 (1), 76
- **R. K. LEWIS ; J. M. MORABITO ; J. C. C. TSAI.** Primary oxygen ion implantation effects on depth profiles by secondary ion emission mass spectrometry. *Appl. Phys. Lett.,* 1973, vol. 23 (5), 260-262
- **J. C. VICKERMAN ; A. BROWN ; N. M. REED.** Secondary ion mass spectrometry: Principles and applications. Clarendon Press, 1989
- **R. G. WILSON ; F. A. STEVIE ; C. W. MAGEE.** Secondary ion mass spectrometry: A practical handbook for depth profiling and bulk impurity analysis. John Wiley & Sons Inc, 1989
- **Z. LUO ; S. LIM ; Z. TIAN ; J. SHANG ; L. LAI ; B. MACDONALD ; C. FU ; Z. SHEN ; T. YU ; J. LIN.** *J. Mater. Chem.,* 2011, vol. 21, 8038
- **G. LUPINA ; J. KITZMANN ; I. COSTINA ; M. LUKOSIUS ; C. WENGER ; A. WOLFF ; S. VAZIRI ; M. OESTLING ; I. PASTERNAK ; A. KRAJEWSKA.** *ACS Nano,* 2015, vol. 9 (5), 4776
- **N. DWIVEDI ; N. SATYANARAYANA ; R. YEO ; H. XU ; K. LOH ; S. TRIPATHY ; C. BHATIA.** *Sci. Rep.,* 2015, vol. 5, 11607
- **W. XIE ; L.-T. WENG ; K. NG ; C. CHAN ; C.-M. CHAN.** *Carbon,* 2015, vol. 94, 740
- **Q. LI ; H. CHOU ; J.-H. ZHONG ; J.-Y. LIU ; A. DOLOCAN ; J. ZHANG ; Y. ZHOU ; R. RUOFF ; S. CHEN ; W. CAI.** *Nano Lett.,* 2013, vol. 13 (2), 486

- **H. CHOU ; A. ISMACH ; R. GHOSH ; R. RUOFF ; A. DOLOCAN.** *Nat. Commun.,* 2015, vol. 6, 7482
- **S. YANNOPOULOS ; A. SIOKOU ; N. NASIKAS ; V. DRACOPOULOS ; F. RAVANI ; G. PAPATHEO-DOROU.** *Adv. Funct. Mater.,* 2012, vol. 22, 113
- **P. MICHALOWSKI ; W. KASZUB ; A. MERKULOV ; W. STRUPINSKI.** Secondary ion mass spectroscopy depth profiling of hydrogen-intercalated graphene on SiC. *Appl. Phys. Lett.,* 2016, vol. 109, 011904
- **I. S. GILMORE ; M. P. SEAH.** Static SIMS: towards unfragmented mass spectra - the G-SIMS procedure. *Appl. Surf. Sci.,* July 2000, vol. 161 (3-4), 465-480
- **X. LIANG et al.** Toward Clean and Crackless Transfer of Graphene. *ACS Nano,* 2011, vol. 5 (11), 9144-9153
- **X. LI.** Transfer of Large-Area Graphene Films for High-Performance Transparent Conductive Electrodes. *Nano Lett.,* 2009, vol. 9 (12), 4359-4363